# NOUVEAU FASCICULE DE BREVET EUROPEEN

(11) **EP 0 337 037 B2**
(45) Date de publication et mention de la décision concernant l'opposition: **22.09.1999**
(45) Mention de la délivrance du brevet: 26.08.1992
(21) Numéro de dépôt: 88400865.7
(22) Date de dépôt: 11.04.1988
(51) Int. Cl.: F16L 9/12

(54) **Tubes à base de résine polyoléfinique pour la réalisation de canalisations**
Polyolefinharzrohre für die Verwirklichung von Rohrleitungen
Tubes made of polyolefin resin for the realization of canalisations

(43) Date de publication de la demande: 18.10.1989
(73) Titulaire: SOCIETE ALPHACAN, 78170 La Celle Saint-Cloud (FR)
(72) Inventeur: Bourjot, Pierre, F-79670 Maden (FR); Garnaud, Marie-Anne, F-92150 La Garenne Colombe (FR)
(74) Mandataire: Foiret, Claude Serge

(56) Documents cités:
- DE-A- 2 443 980
- DE-A- 2 747 840
- JP-A- 5 461 274
- JP-A- 5 611 248
- JP-A- 62 255 692
- JP-U- 59 364 423
- NL-A- 7 600 937

## Description

La présente invention concerne la conception de tubes en résines polyoléfiniques destinés à constituer des canalisations de grandes longueurs. Elle vise plus particulièrement à proposer des tubes de caractéristiques améliorées qui puissent être mis en oeuvre par les mêmes techniques et les mêmes pratiques que celles qui sont appliquées actuellement de manière courante dans la mise en place de tubes en résines polyoléfiniques, plus particulièrement les résines à base de polyéthylène.

On sait notamment que l'on utilise des tubes de ce type pour la pose des canalisations qui servent à la distribution urbaine et interurbaine de fluides tels que le gaz de ville, et que dans ces applications, il est usuel d'assembler les tubes successifs au moyen de manchons tubulaires, également en résines polyoléfiniques, qui enveloppent les extrémités de deux tubes placés bout à bout et qui sont soudés thermiquement sur ces extrémités des tubes. sur tout leur pourtour, le chauffage nécessaire étant réalisé à l'aide de résistances électriques incorporées dans la masse des manchons lors de leur fabrication. On comprend que cette technique d'assemblage a fait l'objet d'une longue mise au point, qu'elle implique un savoir-faire acquis durablement par les'poseurs de canalisations et qu'il est souhaitable de ne pas la modifier.

On comprend aussi que cette technique met à profit la capacité qu'ont les matériaux thermo-plastiques à base de résines polyoléfiniques, plus particulièrement le polyéthylène et les copolymères d'éthylène, de se souder sur eux-mêmes quand ils sont ramollis par chauffage. Mais ces matériaux ont en contrepartie un certain nombre d'inconvénients, en particulier une tendance au fluage sous pression à long terme ou à température élevée, des risques de fissuration sous contrainte mécanique, une faible résistance à certains agents chimiques, une certaine sensibilité à l'abrasion lors de la pose en tranchée. Pour des canalisations qui doivent résister à la pression des fluides à véhiculer ainsi qu'aux agents mécaniques ou chimiques auxquels ils sont soumis, de l'intérieur ou de l'extérieur, pendant des durées d'utilisation de plusieurs dizaines d'années, ceci impose l'emploi de tubes de forte épaisseur ou bien comme dans le cas du DE-A-2 443 980 de gainer au moins partiellement le tube en polyoléfine d'une couche de renfort en résine de chlorure de vinyle. Dans ce dernier cas les tubes sont liés les uns aux autres par des manchons en résine de chlorure de vinyle.
Le prix de ces tubes est donc élevé, et ceci non seulement par la quantité de matière nécessaire, mais aussi par suite d'une vitesse de production relativement lente, liée au débit limité des extrudeuses utilisées pour la fabrication de ces tubes. En outre, le poids et l'encombrement constituent naturellement des inconvénients dans le transport des tubes et la pose des canalisations.

La demande de brevet publié JP 56-11248 concerne des structures stratifiées dans lesquelles une couche de polyoléfine greffée au silane et une couche de résine contenant un catalyseur d'hydrolyse des silanes sont en contact l'une avec l'autre. Ces structures peuvent être des tubes ou des manchons.

Le modèle d'utilité JP N° 177 422-1980 concerne un tuyau multicouche en résines thermoplastique réticulée ayant une teneur en gel d'au moins 40 %, les autres couches en résine synthétique thermoplastique ayant une épaisseur représentant au moins la moitié de l'épaisseur totale de la paroi.

La demande de brevet publiée JP-62-255692 divulgue un manchon en une seule résine thermoplastique, dans laquelle est noyée une résistance électrique de chauffage.

La présente invention propose un tube extrudé pour la fabrication de canalisations de grandes longueurs par assemblage bout à bout, comportant une paroi formée de deux couches coaxiales obtenues par coextrusion, l'une de ces couches, côté interne, formant une âme en une première résine polyéthylénique réticulée par du vinyltriméthoxysilane greffé puis, hydrolysé, l'autre couche côté externe, formant une couche de surface en une seconde résine polyéthylénique ayant au départ une densité 0,956 et un indice de fluidité 0,1 à 190°C sous 2,16 bars sous forme thermoplastique et soudable thermiquement, tube caractérisé en ce que :
- son diamètre extérieur est de 32,1 mm
- sa paroi a une épaisseur de 3,1 à 3,2 mm,
- sa couche de surface a une épaisseur de 0,4 mm en moyenne,
- son âme a été formée par la coextrusion suivi d'une hydrolyse réticulante d'une composition de polyéthylène d'une densité de 0,948, d'un indice de fluidité de 0,2 sous 2,16 bars à 190°C et contenant en poids par rapp rt à son poids total :
   1 à 2 % de vinyltriméthoxysilane, de l'ordre de 0,05 % de dilaurate de dibutylétain, de 0,05 à 0, 2 % de peroxyde de dicumyle, cette composition ayant été chauffée dans le mélangeur de l'extrudeuse pour obtenir le greffage du vinyltriméthoxysilane.

La présente invention propose également un tube extrudé pour la fabrication de canalisations de grandes longueurs par assemblage bout à bout, comportant une paroi formée de deux couches coaxiales obtenues par coextrusion, l'une de ces couches, côté interne, formant une âme en une première résine polyéthylénique réticulée par du vinyltriméthoxysilane greffé puis hydrolysé, l'autre couche, côté externe, formant une couche de surface en une seconde résine polyéthylénique de densité 0,956 et d'indice de fluidité 0,1 à 190°C sous 2,16 bars sous forme thermoplastique et soudable thermiquement, tube caractérisé en ce que :
- son diamètre extérieur est de 150 mm
- sa paroi a une épaisseur comprise entre 10 et 15 mm,
- sa couche de surface a une épaisseur comprise entre 0,1 et 2 mm.
- son âme a été formée par la coextrusion suivi d'une hydrolyse réticulante d'une composition de polyéthylène ayant au départ une densité de 0,948, d'un indice de fluidité de 0,2 sous 2,16 bars à 190°C et contenant en poids par rapport à son poids total :
   1 à 2 % de vinyltriméthoxysilane, de l'ordre de 0,05 % de dilaurate de dibutylétain, de 0,05 à 0, 2 % de peroxyde de dicumyle, cette composition ayant été chauffée dans le mélangeur de l'extrudeuse pour obtenir le greffage du vinyltrimethoxysilane.

Il est notamment avantageux, en combinaison avec des tubes dont la paroi comporte une couche de surface thermoplastique autour d'une âme en matière réticulée, d'utiliser des manchons d'assemblage de ces tubes qui sont constitués d'une manière analogue, mais avec la couche de surface thermoplastique sur la face interne par rapport à l'âme, pour réaliser l'assemblage par soudage thermique de cette couche interne sur la couche de surface thermoplastique présente à l'extérieur des tubes, en leurs extrémités disposées bout à bout.

Il est possible d'utiliser des manchons tubulaires destinés à l'assemblage des tubes en matières thermoplastiques, comportant une paroi comprenant deux couches cylindriques coaxiales, l'une formant une âme, disposée du côté externe, l'autre- formant une couche de surface, disposée du côté interne, l'âme étant en une résine polyéthylénique réticulée analogue à celle desdits tubes et la couche de surface étant en une résine polyéthylénique, sous forme thermoplastique et soudable thermiquement, analogue à celle desdits tubes et propre à être soudée à une autre résine polyoléfinique par des moyens de soudure, ledit manchon ayant été constitué en mettant ses deux couches en contact intime l'une avec l'autre avant de provoquer la réticulation de la composition réticulable utilisée pour l'âme.

Ces moyens de soudure seront avantageusement constitués par une résistance électrique de chauffage noyée dans lesdits manchons.

Naturellement, de tels manchons peuvent être de forme droite, ou de forme coudée, ou comporter plusieurs branches, en T ou en Y par exemple, pour réaliser toutes sortes de branchement ou dérivations sur les canalisations.

Pour l'assemblage des tubes entre eux, par la technique mentionnée, l'emploi d'une résine polyoléfinique réticulée pour l'âme des tubes présente l'avantage supplémentaire de conduire à une matière thermoréticulable. Cette propriété peut être mise à profit pour assurer des efforts de pression favorables à un soudage efficace.

Dans la fabrication des tubes selon l'invention, ainsi éventuellement que dans celle des manchons d'assemblage, on peut avantageusement. obtenir la liaison intime qui rend la couche de surface étroitement solidaire de l'âme, en réalisant la mise en forme des matières qui les constituent, par extrusion, avant de provoquer la réticulation de la composition formant l'âme.

On notera ici que pour obtenir le greffage de l'alcoxysilane et la réticulation conduisant à la résine réticulée de l'âme, on peut procéder en deux étapes ou en une seule. Dans le premier cas la composition amenée à l'extrusion contient l'alcoxysilane déjà greffé sur la chaîne de polyoléfine par ouverture de sa liaison insaturée, avec éventuellement les additifs classiques favorisant la réticulation après extrusion, alors que dans le second, la réaction chimique de greffage s'effectue pendant l'extrusion, à la température de l'extrusion et en présence d'initiateurs classiques introduits à cet effet dans la composition.

On comprendra aisément que dans les opérations de coextrusion comme dans la constitution des parois des éléments tubulaires, le nombre de couches n'est pas nécessairement limité à deux. Au contraire, il peut être avantageux, par exemple, de prévoir une couche intermédiaire entre l'âme et la couche de surface, ou de prévoir une série de couches intermédiaires de compositions progressivement variables d'une couche à l'autre. Dans un mode de réalisation préféré de l'invention où l'on utilise la même résine polyoléfinique comme constituant essentiel pour l'âme et pour la couche de surface, on peut notamment faire varier progressivement, d'une couche à l'autre, la proportion d'alcoxysilane, et donc le taux de réticulation de la polyoléfine, étant entendu que ce taux de réticulation doit rester suffisamment faible en surface du tube pour permettre le soudage, et que dans la couche formant l'âme, il doit être relativement élevé et suffisant pour apporter à l'ensemble les améliorations recherchées en résistance mécanique et en tenue à long terme.

On considère en général de ce point de vue que le taux de réticulation dans la matière de l'âme devrait de préférence être supérieur à 30 % et notamment compris entre 50 et 70 %. Pour la couche de surface le taux de réticulation peut être nul, mais il peut également être compris entre 2 % et 5 %. par exemple, avec alors l'avantage de conduire à une résistance au cisaillement améliorée sans affecter sensiblement la soudabilité.

Les compositions de polymères et copolymères de polyoléfines réticulées par des alcoxysilanes insaturés sont en elles-mêmes connues. Leur intérêt essentiel dans la présente invention est de conduire, pour des épaisseurs de paroi réduites, et donc des poids et des coûts de fabrication et de mise en oeuvre plus faibles, à des performances améliorées dans l'utilisation des tubes à base de polyoléfines, notamment en ce qui concerne la résistance mécanique et son comportement dans le temps. De ce point de vue, on a pu vérifier, en particulier, par des essais de fluage sous pression, que pour des contraintes supportables équivalentes en début d' utilisation. la résistance des tubes selon l'invention se trouve maintenue pendant des durées beaucoup plus longues que les tubes classiques, ce qui est éminemment favorable pour les applications à la fabrication des canalisations. D'autres propriétés sont également améliorées, comme la résistance à l'abrasion et la résistance aux agressions chimiques, et là, il est de peu d'importance que la couche de surface restant éventuellement accessible le long des tubes soit relativement fragile, du moment qu'elle a joué son rôle dans le soudage des extrémités lors de l'assemblage des tubes.

Les constituants à utiliser dans les compositions servant à la fabrication des tubes selon l'invention, et éventuellement de leurs manchons d'assemblage, sont en eux-mêmes classiques, de même que les critères présidant à leur choix et au réglage de leurs proportions. Ainsi par exemple, il est souvent souhaitable, selon l'invention, d'utiliser comme polymère thermoplastique de base, du polyéthylène ou du polypropylène avec une préférence pour le polyéthylène, ou les copolymères d'éthylène ou de propylène avec des monomères compatibles, comme le propylène (pour l'éthylène), le chlorure d'éthylène, ou l'acétate de vinyle.

Quant aux agents de greffage et de réticulation utilisés dans la composition constituant l'âme des éléments tubulaires, ils peuvent être avantageusement choisis parmi les silanes comportant d'une part une double liaison éthylénique pour le greffage et portant d'autre part au moins un, et de préférence au moins deux groupements capables, par hydrolyse, de donner lieu à des réactions de condensation, ce qui est le cas notamment des groupements alcoxy comprenant de 1 à 4 atomes de carbone, comme les radicaux méthoxy et éthoxy. Un exemple préféré d'un tel silane est le vinyltriméthoxysilane. Par ailleurs, les compositions contiennent des constituants secondaires classiques, parmi lesquels en particulier, des promoteurs de polymérisation radicalaire et des catalyseurs d'hydrolyse des alcoxysilanes.

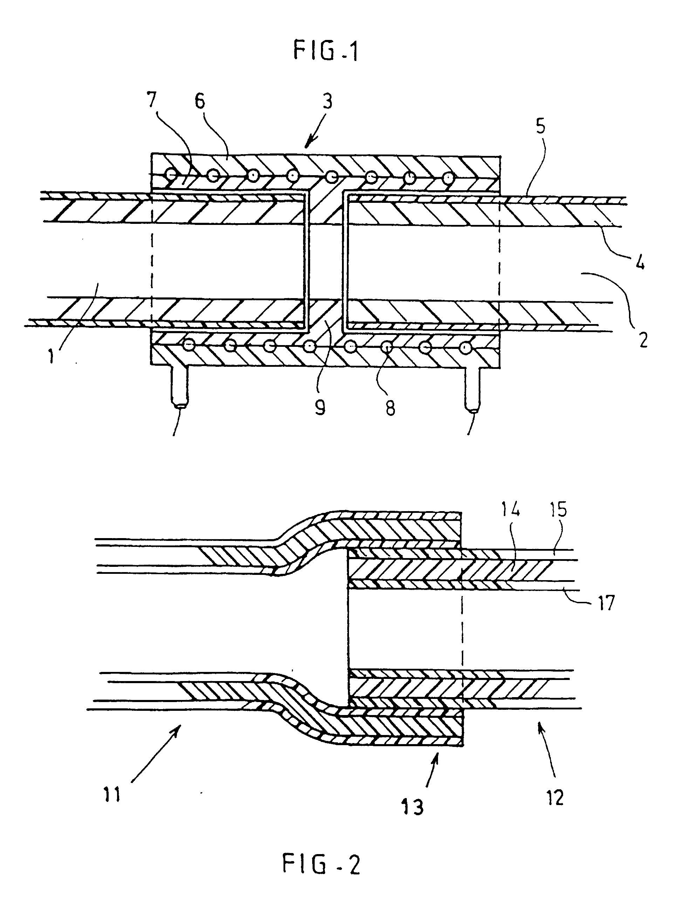

On décrira maintenant plus en détails quelques formes de réalisation particulières de l'invention qui en feront mieux comprendre les caractéristiques essentielles et les avantages, étant entendu toutefois que ces formes de réalisation sont choisies à titre d'exemples et qu'elles ne sont nullement limitatives. La description est illustrée par les figures 1 et 2 des dessins annexés, qui représentent schématiquement, en coupe partielle :
- pour la figure 1 les extrémités de deux tubes bout à bout, avec un manchon d'assemblage correspondant ;
- pour la figure 2 les extrémités de deux tubes assemblées l'une dans l'autre.

Sur la figure 1, les deux tubes portent les références 1 et 2, tandis que le manchon d'assemblage porte la référence 3. On a fait apparaître que les tubes 1 et 2 sont constitués chacun par une paroi de forme tubulaire cylindrique, qui comprend deux couches coaxiales de matière plastique : une âme 4 du côté interne et une couche de surface 5 du côté externe. De manière complémentaire, le manchon 3 est dimensionné pour entourer les extrémités des deux tubes, sans jeu notable, et sa paroi comporte également deux couches cylindriques coaxiales, mais l'âme 6 est disposée du côté externe et la couche de surface 7 est disposée du côté interne. Le manchon 3 comporte en outre des moyens de soudure constitués par une résistance électrique schématisée en 8, qui est noyée dans la masse du manchon, sensiblement à l'interface entre les deux couches.

On comprendra aisément que ces moyens de soudure peuvent être également réalisés en chauffant le manchon de l'extérieur tel que décrit plus loin.

Dans le mode de réalisation particulier considéré ici, on admet que les tubes de l'invention sont fabriqués par extrusion, dors que les manchons peuvent être réalisés soit par extrusion, soit par injection, sans que leurs qualités en soient affectées. Mais dans tous les cas, on constitue l'élément tubulaire, tube ou manchon, à partir des compositions appropriées et aux dimensions désirées, avec ses deux couches en contact intime l'une avec l'autre, avant de provoquer la réticulation de la composition réticulable utilisée pour l'âme. C'est ainsi que l'on assure leur solidarisation définitive.

On prépare deux compositions différentes à base de polyéthylène, qui sont présentées à l'entrée d'une extrudeuse à deux filières concentriques à une température de l'ordre de 150 °C à 250 °C. La première composition, alimentant la filière exteme, est du polyéthylène de densité 0,956 et d'indice de fluidité 0.1 à 190 °C sous 2.16 bars. La seconde est une composition de polyéthylène réticulable, qui contient avec le polyéthylène du vinyltriméthoxysilane, dans une proportion de 1 à 2 % en poids par rapport au poids total de la composition, ainsi que du peroxyde de dicumyle dans la proportion de 0.05 à 0.2 % en poids et du dilaurate de dibutyl-étain dans une proportion de l'ordre de 0,05 % en poids. Ce polyéthylène greffable et réticulable présente une densité de 0,948 et un indice de fluidité de 0,2 sous 2,16 bars à 190 °C. Le chauffage dans le mélangeur de l'extrudeuse réalise le greffage du vinylsilane sur la chaîne de polyéthylène, par ouverture des doubles liaisons éthyléniques favorisée par le peroxyde organique.

L'élément tubulaire à deux couches coaxiales obtenu à la sortie de l'extrudeuse est découpé en tronçons à la longueur de tube désirée, et ces tubes sont conservés quelques jours exposés à l'humidité de l'air ambiant. Ceci provoque la réticulation de la composition constituant la couche interne, par hydrolyse des groupements triméthoxysilane greffés et condensation des silanols, cette réaction étant catalysée par le sel d'étain présent dans la composition. Dans le tube final, seule cette couche interne, qui constitue toutelois l'essentiel de l'épaisseur de parois, est réticulée, alors que la couche de surface externe reste sous forme thermoplastique.

En section, les dimensions sont les suivantes :
Diamètre extérieur du tube : 32,1 mm
Epaisseur totale de la paroi : 3,1-3,2 mm
Epaisseur de la couche externe : 0,4 mm en moyenne.

Par ailleurs, en vue d'essais de résistance, on découpe des tronçons d'environ 20 cm de longueur dans l'élément tubulaire obtenu à la sortie de l'extrudeuse, perpendiculairement à l'axe, et on les soumet à hydrolyse pendant 8 heures à 80 °C dans l'eau pour assurer la réticulation. Après séchage, on les assemble deux à deux bout à bout au moyen de manchons thermosoudables traditionnels, du type de ceux qui sont disponibles dans le commerce sous la dénomination "Innogaz".

Les échantillons ainsi obtenus sont soumis, dans un bac à 80 °C, à une pression hydrostatique telle que la contrainte τ soit de 4 MPa quand cette contrainte est calculée par la formule : τ = P ( D - e ) / 2 e, où D est le diamètre extérieur du tube, e est l'épaisseur totale de la paroi, et P est la pression interne dans le tube. Cette pression est ici égale à 0,85 MPa, soit 8.5 bars.

La contrainte est maintenue pendant 8800 heures sur quatre échantillons semblables, sans que l'on puisse constater la moindre défaillance.

Après un repos de 24 heures à 20 °C, les mêmes échantillons sont portés à une pression de 20 bars pendant 168 heures. Aucun éclatement n'est constaté.

En variante de l'exemple qui précède, on peut réaliser le greffage et la réticulation du vinylméthoxysilane en deux étapes différentes, l'une avant. l'autre après l'extrusion. Dans ce cas, on part d'un polyéthylène préalablement greffé par chauffage, extrusion et granulation, d'un mélange contenant le polyéthylène, le vinyltriméthoxysilane et le peroxyde organique initiateur, auquel on ajoute à l'alimentation de l'extrudeuse, un mélange maître contenant le catalyseur de condensation par hydrolyse. La composition présente alors un indice de fluidité 0,5 sous 5 bars à 190 °C.

Selon une autre variante, l'épaisseur totale de la paroi des tubes est comprise entre 10 et 15 mm, pour des tubes de 150 mm de diamètre extérieur. Quant à l'épaisseur de la couche de surface soudable thermiquement, elle peut varier par exemple entre 0,1 et 2 mm.

Dans l'ensemble, par rapport aux tubes de polyéthylène classiques, l'invention permet une augmentation très importante de la tenue sous pression dans le temps, sans fluage, une amélioration importante des propriétés mécaniques à chaud, la suppression des risques de fissuration, l'augmentation de la résistance aux agents chimiques et l'amélioration de la résistance à l'abrasion. Toutes ces améliorations peuvent conduire par ailleurs, et sans risques, à une réduction de l'épaisseur des tubes de l'ordre de 50 %, par rapport à ceux réalisés actuellement exclusivement en matériaux thermoplastiques, ce qui implique des progrès techniques et économiques considérables, avec notamment une réduction importante du coût en matières, l'augmentation corrélative des vitesses de production, une augmentation sensible de la capacité de transport des réseaux, du fait de la section accrue du trou central des tubes.

Et cependant, ces tubes peuvent sans difficulté être assemblés par thermosoudage au niveau de la couche de surface externe, par la technique usuelle. On peut utiliser à cet effet des manchons existant actuellement dans le commerce, comme on l'a déjà indiqué. Mais on peut aussi leur préférer des manchons comme illustré par la figure 1.

De tels manchons comportent une couche de polyéthylène réticulé 6 sur leur face extérieure, et ils présentent alors les mêmes avantages de résistance mécanique, thermique et et chimique que les tubes. De plus, quand elle est chauffée, elle subit un rétreint qui exerce sur les tubes une pression favorable au soudage. La couche thermosoudable de l'intérieur présente une épaisseur comprise entre 1 et 4 mm par exemple, et la résistance incorporée dans les manchons permet de chauffer cette couche à une température de l'ordre de 150 à 200 °C pour réaliser son soudage sur la couche de surface externe des tubes. De plus, le polyéthylène du manchon, au moins dans cette couche thermosoudable, est de préférence un Copolymère avec l'acétate de vinyle, dans la proportion de 30 % en poids, par exemple. par rapport au poids du mélange, de sorte que sa capacité d'adhérence par thermosoudage est améliorée.

Enfin, on voit sur la figure 1 que la couche interne du manchon se prolonge en une couronne interne 9 dans la partie médiane du manchon. Lors de l'assemblage des deux tubes bout à bout, cette couronne vient en fait s'intercaler entre les extrémités des parois des tubes.

Dans le mode de réalisation illustré par la figure 2 les tubes 11 et 12 peuvent être assemblés entre eux sans qu'il soit besoin d'utiliser des mançhons spéciaux. Ces tubes sont réalisés à partir des mêmes compositions que ci-dessus, mais par coextrusion de trois couches coaxiales. La couche centrale constitue l'âme 14, en matière à base de polyoléfine réticulée. La couche exteme 15 et la couche interne 17 sont toutes les deux couches de surface en résine polyoléfinique restant à l'état thermoplastique, et donc thermosoudable. Dans une fabrication industrielle, on fait passer les tubes découpés à la sortie de l'extrudeuse dans un four tunnel où ils sont exposés à une atmosphère de vapeur d'eau saturante à 100 °C dans laquelle il s'éjourne environ 2 h. La réticulation ainsi assurée n'affecte que l'âme des tubes, seule à renfermer la polyoléfine greffée avec le silane.

Pour effectuer l'assemblage des deux tubes 11 et 12, on forme d'abord une tulipe 13 en chauffant l'extrémité du tube 11 à sa température de ramollissement pendant qu'on introduit dedans un mandrin de diamètre sensiblement égal au diamètre extérieur du tube 12. On laisse la tulipe se refroidir à la température ambiante et se durcir autour du mandrin, avant de retirer ce dernier. On engage ensuite l'extrémité coopérante du tube 12 dans la tulipe 13 et l'on chauffe celle-ci de l'extérieur à la température appropriée pour assurer le soudage thermique de la couche de surface interne du tube 11 sur la couche de surface externe du tube 12. Le refroidissement final de la tulipe provoque un rétreint de celle-ci, du fait même de la nature de la résine polyoléfinique réticulée constituant l'âme, ce qui ajoute à l'efficacité de l'adhérence entre les deux couches thermoplastiques soudées ensemble.

## Revendications

1. Tube extrudé pour la fabrication de canalisations de grandes longueurs par assemblage bout à bout, comportant une paroi formée de deux couches coaxiales obtenues par coextrusion, l'une de ces couches, côté interne, formant une âme (4) en une première résine polyéthylénique réticulée par du vinyltriméthoxysilane greffé puis hydrolysé, l'autre couche, côté externe, formant une couche de surface (5) en une seconde résine polyéthylénique ayant au départ une densité 0,956 et un indice de fluidité 0,1 à 190°C sous 2,16 bars sous forme thermoplastique et soudable thermiquement, tube caractérisé en ce que :
- son diamètre extérieur est de 32,1 mm,
- sa paroi a une épaisseur as 3,1 à 3,2 mm,
- sa couche de surface (5) a une épaisseur de 0,4 mm en moyenne,
- son âme a été formée par la coextrusion suivie d'une hydrolyse réticulante d'une composition de polyéthylène d'une densité de 0,948, d'un indice de fluidité de 0,2 sous 2,16 bars à 190°C et contenant en poids par rapport à son poids total:
1 à 2 % de vinyltriméthoxysilane, de l'ordre de 0,05 % de dilaurate de dibutylétain, de 0,05 à 0,2 % de peroxyde de dicumyle, cette composition ayant été chauffée dans le mélangeur de l'extrudeuse pour obtenir le greffage du vinyltriméthoxysilane.

2. Tube extrudé pour la fabrication de canalisations de grandes longueurs par assemblage bout à bout, comportant une paroi formée de deux couches coaxiales obtenues par coextrusion, l'une de ces couches, coté interne, formant une âme (4) en une première résine polyéthylénique réticulée par du vinyltriméthoxysilane greffé puis hydrolysé, l'autre couche, côté externe, formant une couche de surface (5) en une seconde résine polyéthylénique ayant au départ une densité 0,956 et un indice de fluidité 0,1 à 190°C sous 2,16 bars sous forme thermoplastique et soudable thermiquement, tube caractérisé en ce que :
- son diamètre extérieur est de 150 mm,
- sa paroi a une épaisseur comprise entre 10 et 15 mm,
- sa couche de surface a une épaisseur comprise entre 0,1 et 2 mm,
- son âme a été formée par la coextrusion suivi d'une hydrolyse réticulante d'une composition de polyéthylène d'une densité de 0,948, d'un indice de fluidité de 0,2 sous 2,16 bars à 190°C et contenant en poids par rapport à son poids total :
1 à 2 % de vinyltriméthoxysilane, de l'ordre de 0,05 % de dilaurate de dibutylétain, de 0,05 à 0,2 % de peroxyde de dicumyle, cette composition ayant été chauffée dans le mélangeur de l'extrudeuse pour obtenir le greffage du vinyltriméthoxysilane.

## Patentansprüche

1. Extrudiertes Rohr für den Bau von Rohrleitungen großer Länge durch Zusammenfügen der Rohrenden, das eine Wand umfaßt, die aus zwei coaxialen, durch Coextrusion erhaltenen Schichten gebildet ist, wobei die eine dieser Schichten auf der Innenseite einen Kern (4) aus einem ersten Polyethylenharz bildet, das durch aufgepfropftes und anschließend hydrolysiertes Vinyltrimethoxysilan vernetzt ist, und die andere Schicht auf der Außenseite eine Oberflächenschicht (5) aus einem zweiten Polyethylenharz in thermoplastischer und thermisch schweißbarer Form bildet, das anfänglich eine Dichte von 0,956 und einen Schmelzindex von 0,1 bei 190 °C und einem Druck von 2,16 bar aufweist, wobei das Rohr dadurch gekennzeichnet ist, daß
- sein Außendurchmesser 32,1 mm beträgt,
- seine Wanddicke 3,1 bis 3,2 mm beträgt,
- seine Oberflächenschicht (5) eine Dicke von durchschnittlich 0,4 mm aufweist,
- sein Kern durch Coextrusion und darauf folgende vernetzende Hydrolyse einer Polyethylen-Zusammensetzung hergestellt wurde, deren Dichte 0,948 und deren Schmelzindex 0,2 bei 2,16 bar und 190 °C beträgt und die, bezogen auf ihr Gesamtgewicht, enthält:
1 bis 2 Gew.-% Vinyltrimethoxysilan, etwa 0,05 Gew.-% Dibutylzinndilaurat, 0,05 bis 0,2 Gew.-% Dicumylperoxid, wobei diese Zusammensetzung im Mischer des Extruders erwärmt wurde, um die Aufpfropfung des Vinyltrimethoxysilans zu erreichen.

2. Extrudiertes Rohr für den Bau von Rohrleitungen großer Länge durch Zusammenfügen der Rohrenden, das eine Wand umfaßt, die aus zwei coaxialen, durch Coextrusion erhaltenen Schichten gebildet ist, wobei die eine dieser Schichten auf der Innenseite einen Kern (4) aus einem ersten Polyethylenharz bildet, das durch aufgepfropftes und anschließend hydrolysiertes Vinyltrimethoxysilan vernetzt ist, und die andere Schicht auf der Außenseite eine Oberflächenschicht (5) aus einem zweiten Polyethylenharz in thermoplastischer und thermisch schweißbarer Form bildet, das anfänglich eine Dichte von 0,956 und einen Schmelzindex von 0,1 bei 190 °C und einem Druck von 2,16 bar aufweist, wobei das Rohr dadurch gekennzeichnet ist, daß
- sein Außendurchmesser 150 mm beträgt,
- seine Wanddicke 10 bis 15 mm beträgt,
- seine Oberflächenschicht (5) eine Dicke von 0,1 bis 2 mm aufweist,
- sein Kern durch Coextrusion und darauf folgende vernetzende Hydrolyse einer Polyethylen-Zusammensetzung hergestellt wurde, deren Dichte 0,948 und deren Schmelzindex 0,2 bei 2,16 bar und 190 °C beträgt und die, bezogen auf ihr Gesamtgewicht, enthält:
1 bis 2 Gew.-% Vinyltrimethoxysilan, etwa 0,05 Gew.-% Dibutylzinndilaurat, 0,05 bis 0,2 Gew.-% Dicumylperoxid, wobei diese Zusammensetzung im Mischer des Extruders erwärmt wurde, um die Aufpfropfung des Vinyltrimethoxysilans zu erreichen.

## Claims

1. An extruded tube for the construction of long pipelines by end-to-end assembly, comprising a wall formed of two coaxial layers obtained by co-extrusion, one of the said layers, on the inner side, constituting a support element (4), made in a first polyethylene resin reticulated by grafted vinyl trimethoxysilane and then hydrolysed, the other layer, on the outer side, constituting a surface layer (5) made in a second polyethylene resin having a starting density of 0.956 and a fluidity index of 0.1 at 190°C under 2.16 bar, in a thermoplastic and heat weldable form, the tube being characterised in that:
- its outside diameter is 32.1 mm,
- its wall has a thickness of 3.1 to 3.2 mm,
- its surface layer (5) has a mean thickness of 0.4 mm,
- its support element is the product of formation by co-extrusion followed by a step of reticulating hydrolysis of a composition of polyethylene having a density of 0.948, a fluidity index of 0.2 under 2.16 bar at 190°C and containing, by weight in relation to its total weight:
1 to 2% of vinyl trimethoxysilane, an amount of the order of 0.05% of dibutyl tin dilaurate, and 0.05 to 0.2% of dicumyl peroxide, this composition having been heated in the mixer of the extruder so as to obtain the grafting of the vinyl trimethoxysilane.

2. An extruded tube for the construction of long pipelines by end-to-end assembly, comprising a wall formed of two coaxial layers obtained by co-extrusion, one of the said layers, on the inner side, constituting a support element (4), made in a first polyethylene resin reticulated by grafted vinyl trimethoxysilane and then hydrolysed, the other layer, on the outer side, constituting a surface layer (5) made in a second polyethylene resin having a starting density of 0.956 and a fluidity index of 0.1 at 190°C under 2.16 bar, in a thermoplastic and heat weldable form, the tube being characterised in that:
- its outside diameter is 150 mm,
- its wall has a thickness in the range between 10 and 15 mm,
- its surface layer has a thickness in the range between 0.1 and 2 mm,
- its support element is the product of formation by co-extrusion followed by a step of reticulating hydrolysis of a composition of polyethylene having a density of 0.948, a fluidity index of 0.2 under 2.16 bar at 190°C and containing, by weight in relation to its total weight:
1 to 2% of vinyl trimethoxysilane, an amount of the order of 0.05% of dibutyl tin dilaurate, and 0.05 to 0.2% of dicumyl peroxide, this composition having been heated in the mixer of the extruder so as to obtain the grafting of the vinyl trimethoxysilane.
